# EUROPEAN PATENT APPLICATION

(11) **EP 4 663 705 A1**
(43) Date of publication of application: **17.12.2025**
(21) Application number: 24753210.4
(22) Date of filing: 31.01.2024
(51) Int. Cl.: C08L 101/00, B32B 27/18, C08K 3/04, C08K 3/08, C08K 7/00, C08L 23/00, C09D 5/24, C09D 7/61, C09D 201/00

(54) **CONDUCTIVE RESIN COMPOSITION, COATING AGENT, AND LAMINATE**

(30) Priority: 07.02.2023 JP 2023016598
(71) Applicant: Mitsui Chemicals, Inc., Tokyo 104-0028 (JP)
(72) Inventor: HIROTA, Yoshihito, Sodegaura-shi, Chiba 299-0265 (JP); KAWABATA, Shun, Sodegaura-shi, Chiba 299-0265 (JP)
(74) Representative: Hoffmann Eitle
(86) International application number: PCT/JP2024/003094
(87) International publication number: WO 2024/166767

(57) **Abstract**

The conductive resin composition includes a thermoplastic resin binder, resin particles, and a fibrous conductor, and the thermoplastic resin binder and the resin of the resin particles are the same type of resin, and the fibrous conductor is a carbon nanotube and/or a metal nanowire.

## Description

### TECHNICAL FIELD

The present invention relates to a conductive resin composition, a coating agent, and a laminate.

### BACKGROUND ART

Conventionally, a carbon material having high conductivity is used in combination with a resin composition in various electronic devices as a conductive resin composition.

As such a conductive resin composition, for example, a conductive resin composition including a binder such as an acrylic resin, a polyester resin, or a polyurethane resin, and a carbon nanotube having high conductivity has been proposed (for example, see Patent Document 1).

### Citation List

### Patent Document

Patent Document 1: Japanese Unexamined Patent Publication No. 2016-035883

### SUMMARY OF THE INVENTION

### PROBLEM TO BE SOLVED BY THE INVENTION

On the other hand, such a conductive resin composition is required to have higher conductivity in order to be used in an electronic device.

In addition, such a conductive resin composition is used in an electronic device together with a substrate such as plastic with flexibility, and thus is required to have high adhesiveness to the substrate, and excellent stretchability.

The present invention provides a conductive resin composition, a coating agent, and a laminate that have low resistance, excellent conductivity, adhesiveness, and stretchability.

### MEANS FOR SOLVING THE PROBLEM

The present invention [1] includes a conductive resin composition including: a thermoplastic resin binder; resin particles; and a fibrous conductor, wherein the thermoplastic resin binder and a resin of the resin particles are a same type of resin, and wherein the fibrous conductor is a carbon nanotube and/or a metal nanowire.

The present invention [2] includes the conductive resin composition described in the above-described [1], wherein the resin is a polyolefin-based resin.

The present invention [3] includes the conductive resin composition described in the above-described [2], wherein the polyolefin-based resin includes a modified polyolefin-based resin modified with a monomer having a functional group.

The present invention [4] includes the conductive resin composition described in any one of the above-described [1] to [3], wherein the blending ratio of the resin particles is 40 parts by mass or more and 90 parts by mass or less with respect to 100 parts by mass of a total amount of the thermoplastic resin binder and the resin particles.

The present invention [5] includes the conductive resin composition described in any one of the above-described [1] to [4], wherein the blending ratio of the fibrous conductor is more than 0 parts by mass and 50 parts by mass or less with respect to 100 parts by mass of the conductive resin composition.

The present invention [6] includes a coating agent including: the conductive resin composition described in any one of the above-described [1] to [5].

The present invention [7] includes a laminate including: a substrate; and a dried film of the coating agent described in the above-described [6].

### EFFECTS OF THE INVENTION

The conductive resin composition of the present invention includes a thermoplastic resin binder, resin particles, and a fibrous conductor, wherein the thermoplastic resin binder and the resin of the resin particles are the same type of resin, and the fibrous conductor is a carbon nanotube and/or a metal nanowire. Therefore, the conductive resin composition has low resistance and excellent conductivity, and further has excellent adhesiveness and stretchability.

The coating agent of the present invention includes the conductive resin composition of the present invention. Therefore, the coating agent containing the conductive resin composition has low resistance and excellent adhesiveness and stretchability.

The laminate of the present invention includes a dried film of the coating agent of the present invention. Therefore, the laminate of the present invention has low resistance and excellent adhesiveness and stretchability.

### BRIEF DESCRIPTION OF THE DRAWINGS

FIGS. 1 show one embodiment of a method of producing a laminate 1 of the present invention. FIG. 1A shows a first step of preparing a substrate 2. FIG. 1B shows a second step of applying a coating agent to the surface (one-side surface in the thickness direction) of the substrate 2. FIG. 1C shows a third step of drying the coating agent to obtain a dried film 3 of the coating agent.
FIG. 2 is an image of an electron micrograph of Example 6.
FIG. 3 is an image of an electron micrograph of Comparative Example 1.

### DESCRIPTION OF THE EMBODIMENTS

### 1. Conductive Resin Composition

As described in detail later, a conductive resin composition as one embodiment of the present invention is contained in a coating agent to be applied to a surface of a substrate 2.

The conductive resin composition includes a thermoplastic resin binder, resin particles, and a fibrous conductor.

### <Thermoplastic Resin Binder>

The thermoplastic resin binder means a thermoplastic resin that dissolves in an organic solvent described later. More specifically, the thermoplastic resin binder means a thermoplastic resin that is dissolves in an amount of 50% by mass or more at 30°C when the thermoplastic resin binder is added to the organic solvent described later so as to have a solid content concentration described later. The thermoplastic resin binder may be added to the organic solvent while being heated (in a heated state), or may be added to the organic solvent without being heated (in a room temperature state).

The thermoplastic resin binder consists of the same type of resin as the resin of the resin particles described later.

When the thermoplastic resin binder and the resin of the resin particles are the same type of resin, the adhesiveness of the interface between the thermoplastic resin binder and the resin particles can be increased, and the conductive resin composition has excellent stretchability.

The same type of resin means resins based on the same type of main monomer. It does not matter whether the resins are modified or unmodified as long as their main monomers are the same type. For example, even a modified resin and an unmodified resin are defined as the same type of resin as long as they have the same type of main monomer.

The main monomer means a monomer blended in a blending ratio of 50% by mass or more, preferably 60% by mass or more, and more preferably 80% by mass or more in the raw material monomers constituting the resin.

Examples of the thermoplastic resin binder include a polyolefin-based resin, a (meth)acrylic resin, a polystyrene-based resin, a polyester-based resin, a polycarbonate-based resin, a polyamide-based resin, a polyimide-based resin, a vinyl halide-based resin, and a fluorine-based resin, and preferably a polyolefin-based resin and a (meth)acrylic resin are used, and more preferably a polyolefin-based resin is used.

The thermoplastic resin binders may be used alone or in combination of two or more.

The polyolefin-based resin is a homopolymer of polyolefins or a copolymer of polyolefins. The polyolefin copolymer is a copolymer of polyolefins and copolymerizable monomers copolymerizable with the polyolefins.

Examples of the polyolefin-based resin include an unmodified polyolefin-based resin and a modified polyolefin-based resin. As the polyolefin-based resin, preferably a modified polyolefin-based resin is used.

Examples of the unmodified polyolefin-based resin include unmodified polyethylene, unmodified polypropylene, unmodified polyisobutylene, unmodified poly 1-butene, unmodified poly 4-methylpentene, unmodified polyvinylcyclohexane, unmodified polystyrene, unmodified poly p-methylstyrene, unmodified poly α-methylstyrene, an unmodified ethylene-propylene copolymer, an unmodified propylene-butene copolymer, an unmodified styrene-ethylene-propylene-styrene copolymer, an unmodified styrene-ethylene-butylene-styrene copolymer, an unmodified ethylene-butene copolymer, an unmodified ethylene-4-methyl-1-pentene copolymer, an unmodified propylene-4-methyl-1-pentene copolymer, an unmodified butylene-4-methyl-1-pentene copolymer, an unmodified ethylene-hexene copolymer, and an unmodified ethylene-vinyl acetate copolymer, preferably, an unmodified ethylene-propylene copolymer and an unmodified styrene-ethylene-propylene-styrene copolymer are used. Examples of the copolymers include random copolymers and block copolymers (the same applies hereinafter).

The content ratio of ethylene in the unmodified ethylene-propylene copolymer is, for example, 10 mol% or more, preferably 30 mol% or more, more preferably 50 mol% or more, and is, for example, 90 mol% or less, preferably 80 mol% or less, more preferably 70 mol% or less.

The unmodified polyolefin-based resins may be used alone or in combination of two or more.

The modified polyolefin-based resin is a modified product of an unmodified polyolefin-based resin. More specifically, the modified polyolefin-based resin is a modified product in which an unmodified polyolefin-based resin is modified with a monomer having a functional group.

Examples of the modified polyolefin-based resin include a halogenated polyolefin-based resin, an acid-modified polyolefin-based resin, and a halogenated acid-modified polyolefin-based resin.

These modified polyolefin-based resins may be used alone or in combination of two or more.

The halogenated polyolefin-based resin is obtained by halogen-modifying an unmodified polyolefin-based resin by a known method.

Examples of halogen include, for example, fluorine, chlorine, bromine, and iodine.

These halogens may be used alone or in combination of two or more.

That is, examples of the halogenated polyolefin-based resin include a fluorinated polyolefin-based resin, a chlorinated polyolefin-based resin, a brominated polyolefin-based resin, and an iodinated polyolefin-based resin.

The halogenated polyolefin-based resins may be used alone or in combination of two or more.

In the halogenated polyolefin-based resin, the halogenation ratio is not particularly limited, and is appropriately set depending on the purpose and use.

The acid-modified polyolefin-based resin is obtained by acid-modifying an unmodified polyolefin-based resin by a known method.

Examples of the acid include an unsaturated acid. Examples of the unsaturated acid include, for example, maleic acid, fumaric acid, itaconic acid, and (meth)acrylic acid. Examples of the unsaturated acid also include anhydrides thereof. As the unsaturated acid, preferably maleic acid is used.

These acids may be used alone or in combination of two or more.

That is, examples of the acid-modified polyolefin-based resin include a maleic acid-modified polyolefin-based resin, a fumaric acid-modified polyolefin-based resin, an itaconic acid-modified polyolefin-based resin, and a (meth)acrylic acid-modified polyolefin-based resin. As the acid-modified polyolefin-based resin, preferably a maleic acid-modified polyolefin-based resin is used.

The acid-modified polyolefin-based resins may be used alone or in combination of two or more.

Examples of the maleic acid-modified polyolefin-based resin include, for example, maleic acid-modified polyethylene, maleic acid-modified polypropylene, maleic acid-modified polyisobutylene, maleic acid-modified poly 1-butene, maleic acid-modified poly 4-methylpentene, maleic acid-modified polyvinylcyclohexane, a maleic acid-modified ethylene-propylene copolymer, a maleic acid-modified propylene-butene copolymer, a maleic acid-modified styrene-ethylene-propylene-styrene copolymer, a maleic acid-modified styrene-ethylene-butylene-styrene copolymer, a maleic acid-modified ethylene-butene copolymer, a maleic acid modified ethylene-4-methyl-1-pentene copolymer, a maleic acid-modified propylen-4-methyl-1-pentene copolymer, a maleic acid-modified butylene-4-methyl-1-pentene copolymer, a maleic acid-modified ethylene-hexene copolymer, and a maleic acid-modified ethylene-vinyl acetate copolymer. As the maleic acid-modified polyolefin-based resin, preferably a maleic acid-modified styrene-ethylene-propylene-styrene copolymer, a maleic acid-modified propylene-butene copolymer, and a maleic acid-modified styrene-ethylene-butylene-styrene copolymer are used.

The maleic acid-modified polyolefin-based resins may be used alone or in combination of two or more, preferably a maleic acid-modified propylene-butene copolymer, a maleic acid-modified styrene-ethylene-butene-styrene copolymer, and a maleic acid-modified styrene-ethylene-propylene-styrene copolymer are used alone, or a maleic acid-modified propylene-butene copolymer and a maleic acid-modified styrene-ethylene-propylene-styrene copolymer are used in combination, more preferably a maleic acid-modified styrene-ethylene-butene-styrene copolymer is used alone, or a maleic acid-modified propylene-butene copolymer and a maleic acid-modified styrene-ethylene-propylene-styrene copolymer are used in combination.

The content ratio of propylene in the maleic acid-modified propylene-butene copolymer is, for example, 10 mol% or more, preferably 30 mol% or more, more preferably 50 mol% or more, and is, for example, 95 mol% or less, preferably 90 mol% or less, more preferably 85 mol% or less.

In the acid-modified polyolefin-based resin, the modification ratio is not particularly limited, and is appropriately set depending on the purpose and use.

In the acid-modified polyolefin-based resin, the modification ratio of acid is, for example, 0.1 parts by mass or more, preferably 0.5 parts by mass or more, and is for example, 20 parts by mass or less, preferably 10 parts by mass or less, with respect to 100 parts by mass of the total amount of the acid-modified polyolefin-based resin.

The halogenated acid-modified polyolefin-based resin can be obtained, for example, by halogenating an acid-modified polyolefin-based resin by a known method. The halogenated acid-modified polyolefin-based resin can be obtained, for example, by acid-modifying a halogenated polyolefin-based resin by a known method.

The halogenated acid-modified polyolefin-based resins may be used alone or in combination of two or more.

The polyolefin-based resins can be used alone or in combination of two or more, and for example, an unmodified polyolefin-based resin and a modified polyolefin-based resin can be used in combination, and preferably, an ethylene-propylene copolymer and a maleic acid-modified propylene-butene copolymer can be used in combination.

The polyolefin-based resin has a weight-average molecular weight of, for example, 10000 or more, and, for example, 500000 or less, preferably 400000 or less.

The weight-average molecular weight of the polyolefin-based resin is measured by gel permeation chromatography as a molecular weight in terms of standard polystyrene.

The polyolefin-based resin has a melting point of, for example, 30°C or more, preferably 50°C or more, and, for example, 150°C or less, preferably 100°C or less, and, for example, may not have a melting point.

The melting point is measured in accordance with JIS K 7122 (2012).

The polyolefin-based resin has a heat of fusion of, for example, 0 J/g or more, and, for example, 100 J/g or less, preferably 60 J/g or less, more preferably 40 J/g or less. A polyolefin-based resin having no melting point does not have a heat of fusion.

The heat of fusion is measured in accordance with JIS K 7122 (2012).

Examples of the (meth)acrylic resin include a (meth)acrylic homopolymer and a (meth)acrylic copolymer, and preferably a (meth)acrylic homopolymer is used. (Meth)acryl represents an acryl and/or a methacryl.

Examples of the (meth)acrylic homopolymer include a homopolymer of (meth)acrylic acid esters. Examples of (meth)acrylic acid esters include, for example, (meth)acrylic acid methyl, (meth)acrylic acid ethyl, (meth)acrylic acid butyl, (meth)acrylic acid t-butyl, (meth)acrylic acid isobutyl, (meth)acrylic acid hexyl, (meth)acrylic acid octylate, (meth)acrylic acid 2-ethylhexyl, (meth)acrylic acid cyclohexyl, and (meth)acrylic acid phenyl.

The (meth)acrylic acid esters may be used alone or in combination of two or more, and for example, (meth)acrylic acid methyl and (meth)acrylic acid butyl may be used in combination.

Examples of the (meth)acrylic copolymer include a copolymer of the above-described (meth)acrylic acid ester and a copolymerizable monomer. The copolymerizable monomer is a monomer copolymerizable with a (meth)acrylic acid ester. The copolymerizable monomer is not particularly limited, and examples thereof include a known copolymerizable monomer. More specifically, examples of the copolymerizable monomer include a carboxy group-containing copolymerizable monomer, a hydroxy group-containing copolymerizable monomer, an amino group-containing copolymerizable monomer, a cyano group-containing copolymerizable monomer, a styrene-based monomer, and a vinyl ester-based monomer.

These copolymerizable monomers may be used alone or in combination of two or more.

As the thermoplastic resin binder, preferably, an unmodified styrene-ethylene-butylene-styrene copolymer, an unmodified styrene-ethylene-propylene-styrene copolymer, a maleic acid-modified styrene-ethylene-butylene-styrene copolymer, a maleic acid-modified styrene-ethylene-propylene-styrene copolymer, and a copolymer of (meth)acrylic acid methyl and (meth)acrylic acid butyl, a mixture of a maleic acid-modified propylene-butene copolymer and a maleic acid-modified styrene-ethylene-propylene-styrene copolymer, and a mixture of an unmodified ethylene-propylene copolymer and a maleic acid-modified propylene-butene copolymer are used, and more preferably, an unmodified styrene-ethylene-propylene-styrene copolymer, a maleic acid-modified styrene-ethylene-butylene-styrene copolymer, a copolymer of (meth)acrylic acid methyl and (meth)acrylic acid butyl, a mixture of a maleic acid-modified propylene-butene copolymer and a maleic acid-modified styrene-ethylene-propylene-styrene copolymer, a mixture of an unmodified ethylene-propylene copolymer and a maleic acid-modified propylene-butene copolymer are used, more preferably, a mixture of a maleic acid-modified propylene-butene copolymer and a maleic acid-modified styrene-ethylene-propylene-styrene copolymer, and a mixture of an unmodified ethylene-propylene copolymer and a maleic acid-modified propylene-butene copolymer are used, particularly preferably a mixture of a maleic acid-modified propylene-butene copolymer and a maleic acid-modified styrene-ethylene-propylene-styrene copolymer is used.

When the thermoplastic resin binder includes a maleic acid-modified polyolefin-based resin, the conductive resin composition has more excellent adhesiveness.

Furthermore, as described above, the thermoplastic resin binder means a thermoplastic resin that dissolves in the organic solvent described later. That is, the thermoplastic resin binder can be prepared as a solution. More specifically, the above-described resin can be dissolved by adding it to the organic solvent in a heated state or a room temperature state, and heating the mixture so that the resin has the solid concentration described late.

The organic solvent is not particularly limited as long as it is an organic solvent in which the above-described thermoplastic resin binder dissolves. Examples of the organic solvent include toluene, xylene, a methylcyclohexane-methylisobutyl ketone-mixed solvent, a methylcyclohexane-methylethyl ketone-mixed solvent, a methylcyclohexane-ethyl acetate-mixed solvent, a methylcyclohexane-n-propyl acetate-mixed solvent, a cyclohexane-methylethyl ketone-mixed solvent, a cyclohexane-ethyl acetate-mixed solvent, and a cellosolvecyclohexanone-mixed solvent, and preferably, toluene, a methylcyclohexane-methylethyl ketone-mixed solvent, and a methylcyclohexane-ethyl acetate-mixed solvent are used.

The organic solvents may be used alone or in combination of two or more.

The heating temperature of the dissolution is, for example, 30°C or more, preferably 60°C or more, and is, for example, 130°C or less, preferably 120°C or less. The heating time of the dissolution is, for example, 10 minutes or more, preferably 30 minutes or more, and is, for example, 300 minutes or less, preferably 180 minutes or less.

When the thermoplastic resin binder is added to the above-described organic solvent and heated at the above-described temperature for the above-described period of time, for example, the thermoplastic resin binder dissolves in an amount of 50% by mass or more, preferably 80% by mass or more, and more preferably 100% by mass or more.

In addition, it is preferable that the thermoplastic resin binder does not precipitate when the thermoplastic resin binder is heated and dissolved as described above and then cooled to 30°C. That is, the thermoplastic resin binder dissolves at 30°C in an amount of, for example, 50% by mass or more, preferably 80% by mass or more, and more preferably 100% by mass or more.

The thermoplastic resin binder also dissolves in a dispersion liquid (organic solvent) of the resin particles described later, and, for example, dissolves at 30° C in an amount of 50 mass% or more, preferably 80 mass% or more, and more preferably 100 mass% or more.

The solid content concentration of the solution of the thermoplastic resin binder described above is, for example, 5% by mass or more, preferably 10% by mass or more, and is, for example, 50% by mass or less, preferably 30% by mass or less.

The blending ratio of the thermoplastic resin binder (solid content) is, for example, 5 parts by mass or more, preferably 10 parts by mass or more, more preferably 15 parts by mass or more, and is, for example, 90 parts by mass or less, preferably 80 parts by mass or less, more preferably 70 parts by mass or less, even more preferably 60 parts by mass or less, particularly preferably 50 parts by mass or less, and most preferably 40 parts by mass or less, with respect to 100 parts by mass of the conductive resin composition (solid content).

The blending ratio of the thermoplastic resin binder (solid content) is preferably, for example, 5 parts by mass or more, preferably 10 parts by mass or more, more preferably 15 parts by mass or more, and is, for example, 90 parts by mass or less, preferably 80 parts by mass or less, more preferably 70 parts by mass or less, even more preferably 60 parts by mass or less, particularly preferably 50 parts by mass or less, most preferably 40 parts by mass or less, and even more preferably 30 parts by mass or less, with respect to 100 parts by mass of the total amount (solid content) of the thermoplastic resin binder and the resin particles described later.

When the blending ratio of the thermoplastic resin binder (solid content) is the above-described lower limit or more with respect to 100 parts by mass of the total amount (solid content) of the thermoplastic resin binder and the resin particles described later, the conductive resin composition has excellent adhesiveness. When the blending ratio of the thermoplastic resin binder (solid content) is the above-described upper limit or less with respect to 100 parts by mass of the total amount (solid content) of the thermoplastic resin binder and the resin particles described later, the blending ratio of the resin particles described later in the conductive resin composition can be sufficiently ensured, and the conductivity is excellent.

### <Resin Particles>

The resin of the resin particles (raw material resin constituting the resin particles) means a resin dispersed in the organic solvent described later. More specifically, the resin of the resin particles (raw material resin constituting the resin particles) means a resin which does not dissolve or dissolves only in an amount of 20 mass % or less at 30°C when the resin of the resin particles is added to the organic solvent described later so that the resin has the solid content concentration described later. The resin of the resin particles may be added to the organic solvent while being heated (in a heated state), or may be added to the organic solvent without being heated (in a room temperature state).

The resin of the resin particles consists of the same type of resin as the thermoplastic resin binder.

When the thermoplastic resin binder and the resin of the resin particles consist of the same type of resin, the adhesiveness of the interface between the thermoplastic resin binder and the resin particles can be increased, and the conductive resin composition has excellent stretchability.

Examples of the resin of the resin particles include the same resins as those of the thermoplastic resin binder described above. That is, as the resin of the resin particles, preferably, a polyolefin-based resin and an acrylic resin are used, and more preferably a polyolefin-based resin is used.

Examples of the polyolefin-based resin include the same resins as those of the above-described polyolefin-based resin, and preferably a modified polyolefin-based resin is used. As, the polyolefin-based resin, more preferably, a modified polyolefin-based resin is used.

The modified polyolefin-based resin is a modified product of an unmodified polyolefin-based resin. More specifically, the modified polyolefin-based resin is a modified product in which an unmodified polyolefin-based resin is modified with a monomer having a functional group.

Examples of the modified polyolefin-based resin include the same resins as those of the above-described modified polyolefin-based resin, and preferably, an acid-modified polyolefin-based resin is used.

In the acid-modified polyolefin-based resin, the modification ratio of acid is, for example, 0.1 parts by mass or more, preferably 0.5 parts by mass or more, and is, for example, 20 parts by mass or less, preferably 10 parts by mass or less, with respect to 100 parts by mass of the total amount of the acid-modified polyolefin-based resin.

Examples of the acid-modified polyolefin-based resin include the same resins as the above-described acid-modified polyolefin-based resins, and, preferably, a maleic acid-modified polyolefin-based resin is used.

Examples of the maleic acid-modified polyolefin-based resin include the same resins as those of the above-described maleic acid-modified polyolefin-based resin, and, preferably, a maleic acid-modified polypropylene is used.

The polyolefin-based resin has a weight-average molecular weight of, for example, 10000 or more, preferably 30000 or more, and for example, 500000 or less, preferably 400000 or less.

The weight-average molecular weight of the polyolefin-based resin is measured by gel permeation chromatography as a molecular weight in terms of standard polystyrene.

The polyolefin-based resin has a melting point of, for example, 50°C or more, preferably 80°C or more, and, for example, 250°C or less, preferably 200°C or less.

The melting point is measured in accordance with JIS K 7122 (2012).

The polyolefin-based resin has a heat of fusion of, for example, 3 J/g or more, preferably 8 J/g or more. The heat of fusion of the polyolefin-based resin is, for example, 100 J/g or less, preferably 80 J/g or less, and more preferably 60 J/g or less.

The heat of fusion is measured in accordance with JIS K 7122 (2012).

Examples of the (meth)acrylic resin include the same resins as those of the above-described (meth)acrylic resin, and preferably, a (meth)acrylic homopolymer is used.

Examples of the (meth)acrylic homopolymer include a homopolymer of (meth)acrylic acid esters. Examples of the (meth)acrylic acid ester include the same (meth)acrylic acid esters as those of the above-described (meth)acrylic acid ester, and preferably, (meth)acrylic acid methyl is used.

That is, examples of the resin particles include, for example, maleic acid-modified polypropylene resin particles and polymethyl methacrylate resin particles, and preferably maleic acid-modified polypropylene resin particles are used.

When the resin particles contain a maleic acid-modified polyolefin-based resin, the conductive resin composition has more excellent adhesiveness.

The average particle diameter of the resin particles is, for example, 0.1 µm or more, preferably 0.5 µm or more, more preferably 1 µm or more, and is, for example, 30 µm or less, preferably 20 µm or less, more preferably 15 µm or less.

Furthermore, as described above, the resin of the resin particles means a resin that is dispersed in the organic solvent described later. That is, the resin particles can be prepared as a dispersion liquid. More specifically, the resin of the resin particles may be dispersed by adding the resin of the resin particles to the organic solvent in a heated state or a room temperature state so as to have a solid content concentration described below, and stirring the mixture, or may be dispersed by adding the resin of the resin particles to the organic solvent so as to have a solid content concentration described below, and heating the mixture to dissolve, and thereafter cooling the mixture to precipitate.

The organic solvent is not particularly limited as long as it is an organic solvent in which the above-described resin of the resin particles is dispersed. Examples of the organic solvent include an aromatic hydrocarbon, an aliphatic hydrocarbon, an alicyclic hydrocarbon, an alcohol, a ketone-based solvent, cellosolves, esters, a halogenated hydrocarbon, a normal paraffinic solvent, and an isoparaffinic solvent, and preferably an aromatic hydrocarbon is used.

Examples of the aromatic hydrocarbon include, for example, benzene, toluene, and xylene, and preferably xylene is used. Examples of the aliphatic hydrocarbon include, for example, hexane, heptane, octane, and decane. Examples of the alicyclic hydrocarbon include, for example, cyclohexane, cyclohexene, methylcyclohexane, ethylcyclohexane, and decahydro naphthalene. Examples of the alcohol include, for example, methanol, ethanol, isopropyl alcohol, butanol, pentanol, hexanol, propanediol, and phenol. Examples of the ketone-based solvent include, for example, acetone, methyl isobutyl ketone, methyl ethyl ketone, pentanone, hexanone, isophorone, and acetophenone. Examples of the cellosolves include, for example, methyl cellosolve and ethyl cellosolve. Examples of the esters include, for example, methyl acetate, ethyl acetate, butyl acetate, methyl propionate, and butyl formate. Examples of the halogenated hydrocarbon include trichloroethylene, dichloroethylene, and chlorobenzene.

The organic solvents may be used alone or in combination of two or more.

The resin of the resin particles may dissolve in the above-described organic solvent at 180°C or more.

The resin of the resin particles is dispersed in the organic solvent at 30°C. At 30°C, for example, the resin of the resin particles does not dissolve in the above-described organic solvent, or dissolves in the above-described organic solvent, for example, only in an amount of 20% by mass or less, preferably 10% by mass or less, more preferably 1% by mass or less.

The resin of the resin particles is also dispersed at 30°C in a solvent in which the above-described thermoplastic resin binder dissolves. At 30°C, for example, the resin of the resin particles does not dissolve in a solvent in which the above-described thermoplastic resin binder dissolves, or dissolves in the solvent, for example, only in an amount of 20% by mass or less, preferably 10% by mass or less, more preferably 1% by mass or less.

In such a case, the solid content concentration in the dispersion liquid of the resin particles is, for example, 5% by mass or more, preferably 10% by mass or more, and is, for example, 60% by mass or less, preferably 40% by mass or less.

With respect to 100 parts by mass of the conductive resin composition (solid content), the blending ratio of the resin particles (solid content) is, for example, 5 parts by mass or more, preferably 10 parts by mass or more, more preferably 20 parts by mass or more, even more preferably 30 parts by mass or more, particularly preferably 40 parts by mass or more, most preferably 50 parts by mass or more, even more preferably 60 parts by mass or more, or even more preferably 70 parts by mass or more, and is, for example, 95 parts by mass or less, preferably 90 parts by mass or less, more preferably 80 parts by mass or less.

With respect to 100 parts by mass of the total amount (solid content) of the thermoplastic resin binder and the resin particles, the blending ratio of the resin particles (solid content) is, for example, 5 parts by mass or more, preferably 10 parts by mass or more, more preferably 20 parts by mass or more, even more preferably 30 parts by mass or more, particularly preferably 40 parts by mass or more, most preferably 50 parts by mass or more, even more preferably 60 parts by mass or more, or even more preferably 70 parts by mass or more, and is, for example, 95 parts by mass or less, preferably 90 parts by mass or less, more preferably 80 parts by mass or less.

When the blending ratio of the resin particles (solid content) is the above-described lower limit or more with respect to 100 parts by mass of the total amount (solid content) of the thermoplastic resin binder and the resin particles, the conductivity of the conductive resin composition can sufficiently be ensured, and the blending amount of the fibrous conductor can be reduced. Furthermore, when the blending ratio of the resin particles (solid content) is the above-described upper limit or less with respect to 100 parts by mass of the total amount (solid content) of the thermoplastic resin binder and the resin particles, the blending ratio of the thermoplastic resin binder in the conductive resin composition can sufficiently be ensured, and the adhesiveness is excellent.

### <Fibrous Conductor>

The fibrous conductor is a fibrous conductive material composed of a non-metallic material and/or a metallic material.

The non-metallic fibrous conductor is a carbon nanotube.

The metallic fibrous conductor is a metal nanowire.

The fibrous conductors may be used alone or in combination of two or more. That is, the fibrous conductor is a carbon nanotube and/or a metal nanowire. In addition, a non-fibrous conductor may be used in combination.

### [Carbon Nanotube]

Examples of the carbon nanotube include, for example, the carbon nanotubes described in NEDO Report, All About Carbon Nanotubes (Edited by New Energy and Industrial Technology Development Organization, Nikkan Kogyo Shimbun, Ltd., December 26, 2016), and the carbon nanotube is a tube-cylindrical conductive material consisting of only carbon and having a nanometer-sized diameter, and is not particularly limited. Examples thereof include various known carbon nanotubes.

The average diameter of the carbon nanotubes is, for example, 0.1 nm or more, preferably 0.5 nm or more, more preferably 0.8 nm or more, and also, for example, 100 nm or less, preferably 70 nm or less, more preferably 40 nm or less.

The average length of the carbon nanotubes is, for example, 0.1 µm or more, preferably 0.5 µm or more, more preferably 1 µm or more, and is, for example, 1 mm or less, preferably 0.5 mm or less, more preferably 0.1 mm or less.

Examples of the carbon nanotube include a single-walled carbon nanotube (SWCNT) of which cylinder consists of one layer, and a multi-walled carbon nanotube (MWCNT) in which a plurality of carbon nanotubes (CNT) having different diameters are coaxially layered and formed in several layers.

### [Metal Nanowire]

The metal nanowire is, for example, a needle-like/thread-like conductive material made of metal and having a nanometer-sized diameter, and is not particularly limited, and examples thereof include various known metal nanowires.

Examples of the metal constituting the metal nanowire include copper, silver, gold, platinum, palladium, nickel, tin, cobalt, rhodium, iridium, iron, ruthenium, osmium, manganese, molybdenum, tungsten, niobium, tantalum, titanium, bismuth, antimony, lead, and alloys thereof.

The average diameter of the metal nanowires is, for example, 1 nm or more, preferably 5 nm or more, more preferably 10 nm or more, and is, for example, 900 nm or less, preferably 500 nm or less, more preferably 100 nm or less.

The average length of the metal nanowires is, for example, 0.1 µm or more, preferably 0.5 µm or more, more preferably 1 µm or more, and is, for example, 1 mm or less, preferably 0.5 mm or less, more preferably 0.1 mm or less.

That is, examples of the fibrous conductor include a single-walled carbon nanotube, a multi-walled carbon nanotube, and a silver nanowire.

The fibrous conductor can also be prepared as a dispersion liquid. More specifically, the above-described fibrous conductor can be dispersed in an organic solvent. The organic solvent is not particularly limited, and examples thereof include known organic solvents. It is also possible to use a commercially available dispersion liquid of a fibrous conductor.

In such a case, the solid content concentration of the dispersion liquid of the fibrous conductor is, for example, more than 0% by mass, preferably 0.1% by mass or more, more preferably 0.3% by mass or more, and is also, for example, 50% by mass or less, preferably 30% by mass or less.

The blending ratio of the fibrous conductor (solid content) is, for example, more than 0 parts by mass, preferably 0.1 parts by mass or more, more preferably 0.5 parts by mass or more, even more preferably 1.0 parts by mass or more, particularly preferably 1.2 parts by mass or more, and is also, for example, 125 parts by mass or less, preferably 55 parts by mass or less, more preferably 35 parts by mass or less, even more preferably 15 parts by mass or less, and particularly preferably 7 parts by mass or less with respect to 100 parts by mass of the resin particles (solid content).

The blending ratio of the fibrous conductor (solid content) is, for example, more than 0 parts by mass, preferably 0.1 parts by mass or more, more preferably 0.5 parts by mass more, even more preferably 1 part by mass or more, and even more preferably 50 parts by mass or less, preferably 30 parts by mass or less, more preferably 20 parts by mass or less, even more preferably 10 parts by mass or less, and particularly preferably 5 parts by mass or less with respect to 100 parts by mass of the conductive resin composition (solid content).

When the blending ratio of the fibrous conductor is the above-described lower limit or more with respect to 100 parts by mass of the conductive resin composition (solid content), the conductive resin composition has excellent conductivity. Furthermore, when the blending ratio of the fibrous conductor is the above-described upper limit or less with respect to 100 parts by mass of the conductive resin composition (solid content), the conductive resin composition is efficient in terms of producing cost.

In other words, the conductive resin composition includes, for example, a thermoplastic resin binder, resin particles, and a fibrous conductor, wherein the thermoplastic resin binder and the resin of the resin particles are the same type of resin, and the fibrous conductor is a carbon nanotube and/or a metal nanowire. The conductive resin composition preferably includes a polyolefin-based resin as a thermoplastic resin binder, polyolefin-based resin particles as resin particles, and carbon nanotubes or silver nanowires as a fibrous conductor. More preferably, the conductive resin composition includes a maleic acid-modified polyolefin-based resin as a thermoplastic resin binder, maleic acid-modified polyolefin-based resin particles as resin particles, and carbon nanotubes or silver nanowires as a fibrous conductor.

The conductive resin composition contains a thermoplastic resin binder, and thus has excellent adhesiveness.

The conductive resin composition contains a fibrous conductor, and thus has excellent conductivity.

The conductive resin composition contains resin particles, and thus the conductivity can be ensured even if the blending amount of the fibrous conductor is reduced.

When the conductive resin composition includes a maleic acid-modified polyolefin-based resin and maleic acid-modified polyolefin-based resin particles, the conductive resin composition has more excellent adhesiveness.

The conductive resin composition may contain a known additive.

Examples of the additive include a plasticizer, an antifoaming agent, a leveling agent, an antifungal agent, a rust inhibitor, a matting agent, a flame retardant, a thixotropic agent, a tackifier, a thickener, a lubricant, an antistatic agent, a surfactant, a reaction retardant, an antioxidant, an ultraviolet absorber, a hydrolysis inhibitor, a weatherproof stabilizer, a heatresistant stabilizer, a dye, an inorganic pigment, an organic pigment, a curing agent, a crosslinking agent, a silane coupling agent, an antitacking agent, inorganic particles, and organic particles.

The additives may be used alone or in combination of two or more.

The addition ratio and the addition timing of the additive are appropriately set depending on the purpose and use, and the additive may be blended in advance into the above-described thermoplastic resin binder, resin particles, and fibrous conductor.

In addition, the conductive resin composition can be prepared as a dispersion liquid. More specifically, the above-described conductive resin composition can be prepared by dispersing the above-described conductive resin composition in an organic solvent, or dissolving or dispersing the above-described thermoplastic resin binder, resin particles, and fibrous conductor in an organic solvent and mixing them. The organic solvent is not particularly limited, and examples thereof include known organic solvents.

In such a case, the solid content concentration of the dispersion liquid of the conductive resin composition is, for example, 3% by mass or more, preferably 5% by mass or more, and is, for example, 50% by mass or less, preferably 30% by mass or less.

### 2. Coating Agent

The coating agent as one embodiment of the present invention includes a conductive resin composition as one embodiment of the present invention. As described in detail later, the coating agent coats the surface of the substrate to form a dried film of the coating agent.

Specifically, the coating agent containing the above-described conductive resin composition can be used, for example, as a primer, a paint, and an adhesive.

The coating agent contains the above-described conductive resin composition as a main component, and preferably consists of a dispersion liquid of the above-described conductive composition. The main component is, for example, a component contained at a ratio of 80% by mass or more, preferably 90% by mass or more, and usually 100% by mass or less in the component (solid content) excluding the solvent and the dispersion liquid (the same applies hereinafter).

In addition, the coating agent may contain a known additive.

Examples of the additive include a plasticizer, an antifoaming agent, a leveling agent, an antifungal agent, a rust inhibitor, a matting agent, a flame retardant, a thixotropic agent, a tackifier, a thickener, a lubricant, an antistatic agent, a surfactant, a reaction retardant, an antioxidant, an ultraviolet absorber, a hydrolysis inhibitor, a weatherproof stabilizer, a heatresistant stabilizer, a dye, an inorganic pigment, an organic pigment, a curing agent, a crosslinking agent, a silane coupling agent, an antitacking agent, inorganic particles, and organic particles.

The additives may be used alone or in combination of two or more.

As a method of forming a dried film of a coating agent from the coating agent, a known method is used.

As a method of forming a dried film of a coating agent, a coating agent is applied to a substrate by a known application method, and then dried by a known method such as natural drying or heat drying.

Examples of the known application method include a die coating method, a flow coating method, a spray coating method, a bar coating method, a gravure coating method, a gravure reverse coating method, a kiss reverse coating method, a microgravure coating method, a roll coating method, a blade coating method, a rod coating method, a roll doctor coating method, an air knife coating method, a comma roll coating method, a reverse roll coating method, a transfer roll coating method, a kiss roll coating method, a curtain coating method, a screen printing method, and a dipping coating method.

The coating agent described above allows for obtaining a dried film of the coating agent having low resistance and excellent adhesiveness and stretchability.

### 3. Laminate

For the laminate as one embodiment of the present invention, a dried film of a coating agent containing the conductive resin composition as one embodiment of the present invention is used. The laminate includes the dry film of the coating agent containing the conductive resin composition, and a substrate.

### <Substrate>

Examples of the substrate include an organic substrate and an inorganic substrate, and preferably an organic substrate is used.

The organic substrate is a substrate made of an organic material. Examples of the organic material include, for example, plastic, paper, and pulp, and preferably plastic is used.

Examples of the plastic include, for example, polymethyl (meth)methacrylate, polycarbonate, polyallyl carbonate, polyethylene terephthalate (PET), polyacetyl cellulose, acrylonitrile-butadiene-styrene copolymer (ABS), polyolefin, polystyrene, polyurethane, epoxy, poly(meth)acrylate, vinyl chloride, polyimide, and silicone, and preferably polyethylene terephthalate (PET) is used.

These may be used alone or in combination of two or more.

The inorganic substrate is a substrate made of an inorganic material. Examples of the inorganic material include, for example, glass, silica, metal, and metal oxide.

Examples of the metal include aluminum, gold, silver, copper, nickel, zinc, titanium, cobalt, indium, and chromium. Examples of the metal oxide include oxides of the above-described metals.

These may be used alone or in combination of two or more.

The thickness of the substrate is, for example, 1 µm or more, preferably 10 µm or more, more preferably 50 µm or more, and is, for example, 300 µm or less, preferably 200 µm or less, more preferably 150 µm or less.

### 4. Method of Producing Laminate (Method of Using Conductive Resin Composition)

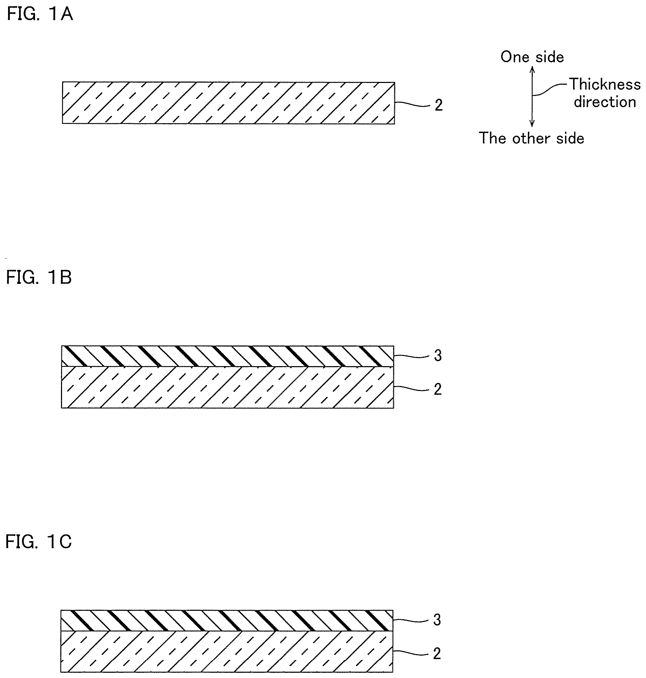

With reference to FIG. 1, one embodiment of a method of producing a laminate of the present invention is described. A coating agent containing a conductive resin composition is used to coat the surface of the substrate 2. By coating the substrate 2 with the coating agent, a laminate 1 is produced.

In FIG. 1, the up-down direction on the surface of the drawing sheet is an up-down direction (thickness direction). The upper side on the surface of the drawing sheet is an upper side (one side in the thickness direction). The lower side on the surface of the drawing sheet is a lower side (the other side in the thickness direction). In addition, a right-left direction and a depth direction on the surface of the drawing sheet are plane directions orthogonal to the up-down direction. Specifically, the directions conform to the arrow indicating a direction in each drawing.

In the method of producing the laminate 1, a coating agent containing a conductive resin composition is applied to a surface (one-side surface in the thickness direction) of the substrate 2, thereby coating the surface (one-side surface in the thickness direction) of the substrate 2 with the coating agent. When the coating agent contains a solvent, the coating agent is dried as necessary to obtain a dried film 3 of the coating agent.

As shown in FIG. 1A, first, the substrate 2 is prepared.

The dry film 3 of the coating agent imparts various physical properties to the surface (one-side surface in the thickness direction) of the substrate 2.

In FIG. 1A, the substrate 2 has a flat plate shape. However, the shape of the substrate 2 is not particularly limited, and various shapes are selected.

Next, as shown in FIG. 1B, the coating agent containing the conductive resin composition is applied to the surface (one-side surface in the thickness direction) of the substrate 2.

Next, when the coating agent contains a solvent, the coating agent is dried as necessary to obtain a dried film 3 of the coating agent.

In this manner, the dry film 3 of the coating agent can be disposed on the surface (one-side surface in the thickness direction) of the substrate 2. That is, the surface (one-side surface in the thickness direction) of the substrate 2 can be coated with the dry film 3 of the coating agent.

The dried film of the coating agent may be used while the method includes a step of heating or of thermocompression bonding at a temperature at which the above-described resin particles dissolve.

In this manner, a laminate 1 is obtained. As shown in FIG. 1C, in the laminate 1, the surface (one-side surface in the thickness direction) of the substrate 2 is coated with the dry film 3 of the coating agent. That is, the laminate 1 includes the substrate 2 and the dry film 3 of the coating agent coating the surface (one-side surface in the thickness direction) of the substrate 2. Specifically, the laminate 1 includes the substrate 2 and the dry film 3 of the coating agent disposed directly on the surface (one-side surface in the thickness direction) of the substrate 2.

The dried film 3 of the coating agent has a film shape.

The dried film 3 of the coating agent has a thickness of, for example, 0.1 µm or more, preferably 1 µm or more, and is, for example, 300 µm or less, preferably 100 µm or less.

As described above, the dry film 3 of the coating agent is formed of a coating agent containing a conductive resin composition.

### <Operations and Effects>

The conductive resin composition of the present invention is a composition contained in a coating agent that coats a surface of a substrate, and includes a thermoplastic resin binder, resin particles, and a fibrous conductor, wherein the thermoplastic resin binder and the resin of the resin particles are the same type of resin, and the fibrous conductor is a carbon nanotube and/or a metal nanowire. Therefore, the coating agent containing the conductive resin composition has low resistance and excellent adhesiveness and stretchability, and the laminate including the dried film of the coating agent has low resistance and excellent adhesiveness and stretchability.

Specifically, the conductive resin composition includes the thermoplastic resin binder. Therefore, excellent adhesiveness is achieved. The conductive composition includes the fibrous conductor. Therefore, excellent conductivity is achieved. Furthermore, the conductive composition includes the resin particles and the fibrous conductor. Therefore, even if the blending amount of the fibrous conductor is reduced, the conductivity can be ensured. In particular, the thermoplastic resin binder and the resin of the resin particles in the conductive resin composition are the same type of resin. Therefore, the adhesiveness of the interface between the thermoplastic resin binder and the resin particles can be increased, and the stretchability can be improved.

The conductive resin composition, the dry film 3 of the coating agent containing the conductive resin composition, and the laminate 1 containing the dry film 3 of the coating agent can preferably be used, for example, for electronic devices.

### Examples

Next, the present invention is described based on Examples and Comparative Examples. The present invention is however not limited by the following Examples. The "parts" and "%" are based on mass unless otherwise specified. The specific numeral values used in the description below, such as mixing ratios (content ratios), physical property values, and parameters, can be replaced with the corresponding mixing ratios (content ratios), physical property values, and parameters in the above-described "DESCRIPTION OF THE EMBODIMENTS", including the upper limit values (numeral values defined with "or less", and "less than") or the lower limit values (numeral values defined with "or more", and "more than").

### 1. Details of Components

The trade names and abbreviations of the components used in each of Production Examples, Examples, and Comparative Examples are detailed.

PBR: propylene-butene copolymer
Maleinized PBR: maleic acid-modified propylene-butene copolymer
SEPS: styrene-ethylene-propylene-styrene copolymer, trade name: SEPTON 2002, manufactured by KURARAY CO., LTD.
SEBS: styrene-ethylene-butene-styrene copolymer, trade name: Kraton G1652, manufactured by Kraton Corporation
Maleinized SEPS: maleic acid-modified styrene-ethylene-propylene-styrene copolymer
Maleinizedd SEBS: maleic acid-modified styrene-ethylene-butene-styrene copolymer
EPR: ethylene-propylene copolymer
PP: propylene polymer
Maleinized PP: maleic acid-modified propylene polymer
Acrylic resin: trade name: KURARITY LA2140, manufactured by KURARAY CO., LTD.
Acrylic resin particles: trade name: MX-1000, manufactured by Soken Chemical & Engineering Co., Ltd.
CNT: carbon nanotube
Multilayer CNT(C-1): trade name: 9326MWL, manufactured by TOKUSHIKI Co., Ltd., butyl acetate dispersion liquid 1% by mass (solid content concentration), particle diameter: 30 µm (dispersion diameter), shape: fibrous
Single layer CNT(C-2): trade name: TUBALL BAT NMP, manufactured by Kusumoto Chemicals, Ltd., N-methylpyrrolidone dispersion liquid 0.4% by mass (solid content concentration), particle diameter: 10 µm (dispersion diameter), shape: fibrous Silver nanowire (C-3): Isopropyl alcohol dispersion liquid manufactured by Sigma Aldrich 0.5% by mass (solid content concentration), particle diameter: 10 µm (dispersion diameter), shape: fibrous
Silver particles: trade name: 47CE-5060, manufactured by OIKE & Co., Ltd., butyl acetate dispersion liquid 60% by mass (solid content concentration), particle diameter: 4 µm (dispersion diameter), shape: flat
PET: polyethylene terephthalate, trade name: Lumirror S10, manufactured by TORAY INDUSTRIES, INC.

### 2. Production of Thermoplastic Resin Binder

### Production Example 1-1 (Production of PBR (A))

To a sufficiently nitrogen-substituted 2L autoclave, 900 ml of hexane and 90 g of 1-butene were charged, and then 1 mmol of triisobutylaluminum was added thereto, and the temperature thereof was raised to 70°C.
Next, propylene was supplied to achieve a total pressure of 7kg/cm²G, and 0.30 mmol of methylaluminoxane and 0.001 mmol of rac-dimethylsilylene-bis {1-(2-methyl-4-phenylindenyl)} zirconium dichloride in terms of Zr atoms were added.
Polymerization was carried out for 30 minutes while propylene was continuously supplied to maintain the total pressure at 7kg/cm²G. After the polymerization, the autoclave was degassed, and the polymer was collected in a large amount of methanol, and dried under a reduced pressure at 110°C for 12 hours. In this manner, PBR (A) was obtained.

The obtained PBR (A) had a melting point of 78.3°C, a heat of fusion of 29.2 J/g, a weight-average molecular weight of 330,000, and a propylene content of 67.2 mol%.

### Production Example 1-2 (Production of Maleinized PBR-Maleinized SEPS Mixture (A-1'))

1.5 kg of the above-described PBR (A) and 1.5 kg of SEPS (SEPTON 2002, manufactured by KURARAY CO., LTD.) were added to 10L of toluene, and the temperature was raised to 145°C under nitrogen atmosphere to dissolve the PBR (A) and SEPS in toluene. In addition, while being stirred, 382 g of maleate anhydride and 175 g of di-tert-butylperoxide were fed to the toluene solution over a period of 4 hours, and subsequently stirred at 145°C for 2 hours. After the mixture was cooled, a large amount of acetone was charged thereto, and the modified copolymer was precipitated, filtered, washed with acetone, and then dried under vacuum. In this manner, a maleinized PBR-maleinized SEPS mixture (A-1') was obtained.

The obtained maleinized PBR-maleinized SEPS mixture (A-1') had a melting point of 75.6°C, a heat of fusion of 14.7 J/g, a weight-average molecular weight of 98,000, and a modification amount of maleic anhydride was 1 part by mass with respect to 100 parts by mass of the modified copolymer.

### Production Example 1-3 (Production of Maleinized PBR (A-2'))

3 kg of the above-mentioned PBR (A) was added to 10L of toluene, and the temperature was raised to 145°C to dissolve the PBR (A) in toluene. In addition, while being stirred, 382 g of maleate anhydride and 175 g of di-tert-butylperoxide were fed to the toluene solution over a period time of 4 hours, and subsequently stirred at 145°C for 2 hours. After the mixture was cooled, a large amount of acetone was charged thereto, and the modified copolymer was precipitated, filtered, washed with acetone, and then dried under vacuum. In this manner, a maleinized PBR (A-2') was produced.

The obtained maleinized PBR (A-2') had a melting point of 75.8°C, a heat of fusion of 28.6 J/g, a weight-average molecular weight of 110,000, and a modification amount of maleic anhydride was 1 part by mass with respect to 100 parts by mass of the modified copolymer.

### Production Example 1-4 (Production of EPR (A-2")

A sufficiently nitrogen-substituted continuous polymerization reactor with a stirring blade was charged with one liter of dehydrated purified hexane, and then a hexane solution of ethyl aluminum sesquichloride (Al (C₂H₅)_{1.5}·Cl_{1.5}) adjusted to 96 mmol/L was continuously fed thereto at a rate of 500 ml/hour for one hour, and thereafter a hexane solution of VO (OC₂H₅) C₁₂ adjusted to 16 mmol/l as a catalyst was continuously fed thereto at a rate of 500 ml/hour, and hexane at a rate of 500 ml/hour. On the other hand, the polymerized liquid was continuously taken out of the upper part of the polymerization reactor so that the polymerized liquid in the polymerized liquid chamber is constantly kept one liter. Next, using a bubbling tube, ethylene gas was supplied at a rate of 47 L/hour, propylene gas at a rate of 47 L/hour, and hydrogen gas at a rate of 20 L/hour. The copolymerization reaction was carried out at 35°C by circulating a refrigerant through a jacket attached to the outside of the polymerization reactor. The obtained polymerized solution was supplied with hydrochloric acid to remove the catalyst therefrom, thereafter charged into a large amount of methanol to precipitate, and then dried under reduced pressure at 130°C for 24 hours. In this manner, EPR (A-2") was obtained.

The obtained EPR(A-2") had no melting point and thus had no heat of fusion. Furthermore, EPR(A-2") had an ethylene content of 55.9 mol% and a weight-average molecular weight of 14,000.

### Production Example 1-5 (Preparation of Maleinized SEBS (A-4'))

3 kg of SEBS (Clayton G1652, manufactured by Clayton Corporation) was added to 10L of toluene, and the temperature was raised to 145°C. to dissolve SEBS in toluene. In addition, while being stirred, 382 g of maleate anhydride and 175 g of di-tert-butylperoxide were fed to the toluene solution over a period time of 4 hours, and subsequently stirred at 145°C for 2 hours. After the mixture was cooled, a large amount of acetone was charged thereto, and the modified copolymer was precipitated, filtered, washed with acetone, and then dried under vacuum. In this manner, a maleinized SEBS (A-4') was obtained.

The obtained maleinized SEBS (A-4') had no melting point and thus had no heat of fusion. Furthermore, the maleinized SEBS (A-4') had a weight-average molecular weight of 100,000, and the modification amount of maleic anhydride was 2 parts by mass relative to 100 parts by mass of the modified copolymer.

### 3. Preparation of Thermoplastic Resin Binder

### Preparation 2-1 (Preparation of Thermoplastic resin binder (A-1))

20 g of a maleinized PBR-maleinized SEPS mixture (A-1') was heat-dissolved in 80 g of a mixed solvent of methylcyclohexane/ethyl acetate = 75/25 to prepare a solution of the thermoplastic resin binder (A-1). The solid content concentration of the solution of the thermoplastic resin binder (A-1) was 20% by weight.

### Production Example 2-2 (Preparation of Thermoplastic Resin Binder (A-2))

16 g of the maleinized PBR (A-2') and 4g of EPR (A-2') were heat-dissolved in 80 g of a mixed solvent of methylcyclohexane/ethyl acetate = 80/20 to prepare a solution of the thermoplastic resin binder (A-2). The solid content concentration of the solution of the thermoplastic resin binder (A-2) was 20% by weight.

### Production Example 2-3 (Preparation of Thermoplastic Resin Binder (A-3))

20 g of an acrylic resin (KURARITY LA 2140, manufactured by Kuraray Co., Ltd.) was heat-dissolved in 80 g of toluene to prepare a solution of the thermoplastic resin binder (A-3). The solid content concentration of the solution of the thermoplastic resin binder (A-3) was 20% byweight.

### Production Example 2-4 (Preparation of Thermoplastic Resin Binder (A-4))

20 g of the maleinized SEBS (A-4') was heat-dissolved in 80 g of a mixed solvent of methylcyclohexane/methylethylketone = 60/40 to prepare a solution of the thermoplastic resin binder (A-4). The solid content concentration of the solution of the thermoplastic resin binder (A-4) was 20% by weight.

### Production Example 2-5 (Preparation of Thermoplastic Resin Binder (A-5))

20 g of SEPS (SEPTON 2002, manufactured by KURARAY CO., LTD.) was heat-dissolved in 80 g of a mixed solvent of methylcyclohexane/methyl ethyl ketone = 60/40 to prepare a solution of thermoplastic resin binder (A-5). The solid content concentration of the solution of the thermoplastic resin binder (A-5) was 20% by weight.

### 4. Production of Resin Particles

### Production Example 3-1 (Production of Maleinized PP (B-1'))

To an autoclave of an internal volume 1.5 L with a stirrer, 100 parts by mass of PP having a propylene unit of 100 mol% and 435 parts by mass of toluene were charged, and while stirring the mixture, the temperature was raised to 140°C to completely dissolve PP. While the solution was maintained at 140°C, 16 parts by mass of maleic anhydride and 1.5 parts by mass of dicumyl peroxide were added dropwise over a period of time of 4 hours while being stirred. After the completion of the dropwise addition, the mixture was further stirred at 140°C for one hour to allow the subsequent reaction to proceed. In this manner, maleinized PP (B-1') was obtained. A solution containing the maleinized PP (B-1') was then cooled to room temperature, and acetone was added to the solution to precipitate the maleinized PP (B-1'). The precipitated maleinized PP (B-1') was repeatedly washed with acetone and then dried to collect the maleinized PP (B-1').

The obtained maleinized PP (B-1') had a melting point of 159°C, a heat of fusion of 98 J/g, a weight-average molecular weight of 100,000, and a modification amount of maleic anhydride was 1.1 parts by mass with respect to 100 parts by mass of the modified copolymer.

### 5. Preparation of Resin Particles

### Production Example 4-1 (Preparation of Resin Particles (B-1))

To an autoclave with a stirring blade, 25 g of the maleinized PP (B-1') and 75 g of xylene were charged and heated to 130°C to completely dissolve the maleinized PP (B-1'). Thereafter, while the mixture was being stirred, the temperature was lowered to 95°C at a cooling rate of 25°C/hour, and then lowered to 60°C at a cooling rate of 2°C/hour. Next, the temperature was lowered to 30°C at a cooling rate of 20°C/hour to obtain a dispersion liquid of resin particles (B-1) having a solid content of 25% by weight and a homogeneous milky white color. The solid content concentration of the dispersion liquid of the resin particles (B-1) was 25% by weight. The obtained resin particles (B-1) had an average particle diameter of 10 µm.

### Production Example 4-2 (Preparation of Resin Particles (B-2))

25 g of acrylic resin particles (MX-1000, manufactured by Soken Chemical & Engineering Co., Ltd.) were dispersed in 75 g of xylene to obtain a dispersion liquid of resin particles (B-2). The solid content concentration of the dispersion liquid of the resin particles (B-2) was 25% by weight. The obtained resin particles (B-2) had an average particle diameter of 10 µm.

### 6. Preparation of Fibrous Conductor

### Production Example 5-1 (Preparation of Conductor (C-4))

Silver particles (47CE-5060, manufactured by OIKE & Co., Ltd.) were dispersed in butyl acetate so as to have a solid content concentration of 1% by mass to obtain a dispersion liquid of a conductor (C-4).

### 7. Preparation of Conductive Resin Composition

### Example 1

22.3 g of a dispersion liquid of the thermoplastic resin binder (A-1) and 2.0 g of a dispersion liquid of the resin particles (B-1) were blended into 5.0 g of a dispersion liquid of the fibrous conductor (C-1) to prepare a conductive resin composition.

### Examples 2 to 15, Comparative Examples 1 to 7, Reference Example 1 and Reference Example 2

Conductive resin compositions were prepared in the same manner as in Example 1, except that the formulations were changed according to Tables 1-5.

### 8. Evaluation

### <Surface Resistance Value>

The conductive resin composition of each of Examples, Comparative Examples, and Reference Examples described above was applied onto a PET film having a thickness of 100 µm (Lumirror S10, manufactured by TORAY INDUSTRIES, INC.), and dried at 100°C for 2 minutes to obtain a dried film of a coating agent. The surface resistance value (Ω/□) of the dried film of the coating agent containing each of the conductive resin compositions was measured according to JIS K7194: 1994 using Loresta GX MCP-T700 manufactured by Nittoseiko Analytech Co., Ltd. The measured surface resistance values were evaluated according to the following criteria. The results are shown in Tables 1 to 5.

### [Criteria]

⊚: ≦ 1.0 × 10⁵Ω/□
∘: more than 1.0 × 10⁵ and 1.0×10¹²Ω/□ or less
×: > 1.0 × 10¹²Ω/□

### <Adhesiveness>

In conformity to JIS K5600-5-6: 1999, six slits were made at 2 mm intervals in the dried film of the coating agent of each of the above-described Examples, Comparative Examples, and Reference Examples with a cutter knife.

Next, six slits were made again so that the slits formed a grid. Cellotape (registered trademark) (CT-24, manufactured by Nichiban Co., Ltd.) was applied to the coating film cut into 25 squares of 2mm×2mm each, and peeled off quickly at an angle of 90°. Among 25 squares of the coating film, the number of residual squares of the squares remaining on the PET was measured. The numbers were evaluated according to the following criteria (the number of residual squares /25). The results are shown in Tables 1 to 5.

### [Criteria]

∘: 25/25
△: 15 to 24/25
×: ≦ 14/25

### <Stretchability>

The test piece of the dry film of the coating agent of each of Examples 6 and 15 and Comparative Examples 5 to 7 was stretched using a universal tensile measuring device until the length of the test piece before the stretch was doubled. The rate of change in the surface resistance value after the stretch with respect to the surface resistance value before the stretch was calculated by the following formula, and evaluated according to the following criteria. The results are shown in Table 5.

Rate of change in surface resistance value (%) = (surface resistance value after stretch - surface resistance value before stretch)/surface resistance value before stretch × 100.

### [Criteria]

∘: below 500%
×: 500% or more or breakage of the dry film of the coating agent

### [Table 1]

**Table 1**

| No. | | | Ex. 1 | Ex. 2 | Ex. 3 | Ex. 4 | Ex. 5 | Ex. 6 | Ex. 7 | Comp. Ex. 1 | Comp. Ex. 2 |
|---|---|---|---|---|---|---|---|---|---|---|---|
| Blending ratio (solid content) with respect to 100 parts by mass of conductive resin composition | Thermoplastic resin binder | A-1 | 89.1 | 79.2 | 59.4 | 49.5 | 39.6 | 19.8 | 9.9 | 99.0 | - |
| | | A-2 | - | - | - | - | - | - | - | - | - |
| | | A-3 | - | - | - | - | - | - | - | - | - |
| | | A-4 | - | - | - | - | - | - | - | - | - |
| | | A-5 | - | - | - | - | - | - | - | - | - |
| | Resin particles | B-1 | 9.9 | 19.8 | 39.6 | 49.5 | 59.4 | 79.2 | 89.1 | - | 99.0 |
| | | B-2 | - | - | - | - | - | - | - | - | - |
| | Fibrous conductor | C-1 | 1.0 | 1.0 | 1.0 | 1.0 | 1.0 | 1.0 | 1.0 | 1.0 | 1.0 |
| | | C-2 | - | - | - | - | - | - | - | - | - |
| | | C-3 | - | - | - | - | - | - | - | - | - |
| | | C-4 | - | - | - | - | - | - | - | - | - |
| Ratio of thermoplastic resin binder/resin particles | | | 9/1 | 8/2 | 6/4 | 5/5 | 4/6 | 2/8 | 1/9 | 10/0 | 0/10 |
| Evaluations | Surface resistance value(Ω/□) | | 1×10¹⁰ | 1×10¹⁰ | 1×10⁸ | 1×10⁸ | 1×10⁷ | 1×10⁷ | 1×10⁷ | **>1**×10¹² | 1×10⁸ |
| | valuation of surface resistance value | | ○ | ○ | ○ | ○ | ○ | ○ | ○ | × | ○ |
| | Adhesiveness (the number of residual squares) | | 25 | 25 | 25 | 25 | 25 | 25 | 18 | 25 | 0 |
| | Evaluation of adhesiveness | | ○ | ○ | ○ | ○ | ○ | ○ | Δ | ○ | × |

### [Table 2]

**Table 2**

| No. | | | Ex. 6 | Ex. 8 | Ex. 9 | Ex. 10 | Comp. Ex. 3 |
|---|---|---|---|---|---|---|---|
| Blending ratio (solid content) with respect to 100 parts by mass of conductive resin composition | Thermoplastic resin binder | A-1 | 19.8 | - | - | - | - |
| | | A-2 | - | 19.8 | - | - | 99.0 |
| | | A-3 | - | - | - | - | - |
| | | A-4 | - | - | 19.8 | - | - |
| | | A-5 | - | - | - | 19.8 | - |
| | Resin particles | B-1 | 79.2 | 79.2 | 79.2 | 79.2 | - |
| | | B-2 | - | - | - | - | - |
| | Fibrous conductor | C-1 | 1.0 | 1.0 | 1.0 | 1.0 | 1.0 |
| | | C-2 | - | - | - | - | - |
| | | C-3 | - | - | - | - | - |
| | | C-4 | - | - | - | - | - |
| Ratio of thermoplastic resin binder/resin particles | | | 2/8 | 2/8 | 2/8 | 2/8 | 10/0 |
| Evaluations | Surface resistance value(Ω/□) | | 1×10⁷ | 1×10⁷ | 1×10⁷ | 1×10⁷ | >1×10¹² |
| | valuation of surface resistance value | | ○ | ○ | ○ | ○ | × |
| | Adhesiveness (the number of residual squares) | | 25 | 25 | 25 | 20 | 25 |
| | Evaluation of adhesiveness | | ○ | ○ | ○ | △ | ○ |

### [Table 3]

**Table 3**

| No. | | | Ex. 6 | Ex. 11 | Ex. 12 | Comp. Ex. 1 | Ref. Ex. 11 | Ref. Ex. 2 |
|---|---|---|---|---|---|---|---|---|
| Blending ratio (solid content) with respect to 100 parts by mass of conductive resin composition | Thermoplastic resin binder | A-1 | 19.8 | 19.0 | 16.0 | 99.0 | 95.0 | 80.0 |
| | | A-2 | - | - | - | - | - | - |
| | | A-3 | - | - | - | - | - | - |
| | | A-4 | - | - | - | - | - | - |
| | | A-5 | - | - | - | - | - | - |
| | Resin particles | B-1 | 79.2 | 76.0 | 64.0 | - | - | - |
| | | B-2 | - | - | - | - | - | - |
| | Fibrous conductor | C-1 | 1.0 | 5.0 | 20.0 | 1.0 | 5.0 | 20.0 |
| | | C-2 | - | - | - | - | - | - |
| | | C-3 | - | - | - | - | - | - |
| | | C-4 | - | - | - | - | - | - |
| Ratio of thermoplastic resin binder/resin particles | | | 2/8 | 2/8 | 2/8 | 10/0 | 10/0 | 10/0 |
| Evaluations | Surface resistance value(Ω/□) | | 1×10⁷ | 2.8×10² | 9.4×10¹ | >1×10¹² | 1×10⁴ | 1×10² |
| | valuation of surface resistance value | | ○ | ⊚ | ⊚ | × | ⊚ | ⊚ |
| | Adhesiveness (the number of residual squares) | | 25 | 25 | 25 | 25 | 25 | 25 |
| | Evaluation of adhesiveness | | ○ | ○ | ○ | ○ | ○ | ○ |

### [Table 4]

**Table 4**

| No. | | | Ex. 6 | Ex. 13 | Ex. 14 | Comp. Ex. 4 |
|---|---|---|---|---|---|---|
| Blending ratio (solid content) with respect to 100 parts by mass of conductive resin composition | Thermoplastic resin binder | A-1 | 19.8 | 19.8 | 19.8 | 19.8 |
| | | A-2 | - | - | - | - |
| | | A-3 | - | - | - | - |
| | | A-4 | - | - | - | - |
| | | A-5 | - | - | - | - |
| | Resin particles | B-1 | 79.2 | 79.2 | 79.2 | 79.2 |
| | | B-2 | - | - | - | - |
| | Fibrous conductor | C-1 | 1.0 | - | - | - |
| | | C-2 | - | 1.0 | - | - |
| | | C-3 | - | - | 1.0 | - |
| | | C-4 | - | - | - | 1.0 |
| Ratio of thermoplastic resin binder/resin particles | | | 2/8 | 2/8 | 2/8 | 2/8 |
| Evaluations | Surface resistance value(Ω/□) | | 1×10⁷ | 1×10⁴ | 1×10² | >1×10¹² |
| | valuation of surface resistance value | | ○ | ⊚ | ⊚ | × |
| | Adhesiveness (the number of residual squares) | | 25 | 25 | 25 | 25 |
| | Evaluation of adhesiveness | | ○ | ○ | ○ | ○ |

### [Table 5]

**Table 5**

| No. | | | Ex. 6 | Ex. 15 | Comp. Ex. 5 | Comp. Ex. 6 | Comp. Ex. 7 |
|---|---|---|---|---|---|---|---|
| Blending ratio (solid content) with respect to 100 parts by mass of conductive resin composition | Thermoplastic resin binder | A-1 | 19.8 | - | - | 19.8 | - |
| | | A-2 | - | - | - | - | - |
| | | A-3 | - | 19.8 | 99.0 | - | 19.8 |
| | | A-4 | - | - | - | - | - |
| | | A-5 | - | - | - | - | - |
| | Resin particles | B-1 | 79.2 | - | - | - | 79.2 |
| | | B-2 | - | 79.2 | - | 79.2 | - |
| | Fibrous conductor | C-1 | 1.0 | 1.0 | 1.0 | 1.0 | 1.0 |
| | | C-2 | - | - | - | - | - |
| | | C-3 | - | - | - | - | - |
| | | C-4 | - | - | - | - | - |
| Ratio of thermoplastic resin binder/resin particles | | | 2/8 | 2/8 | 10/0 | 2/8 | 2/8 |
| Evaluations | Surface resistance value(Ω/□) | | 1×10⁷ | 1×10⁷ | >1×10¹² | 1×10⁷ | 1×10⁷ |
| | valuation of surface resistance value | | ○ | ○ | × | ○ | ○ |
| | Adhesiveness (the number of residual squares) | | 25 | 22 | 25 | 25 | 25 |
| | Evaluation of adhesiveness | | ○ | △ | ○ | ○ | ○ |
| | Stretchability (%) | | 130 | 130 | 400 | 900 | Unmeasurable |
| | Evaluation of stretchability | | ○ | ○ | ○ | × | × |

### <Consideration >

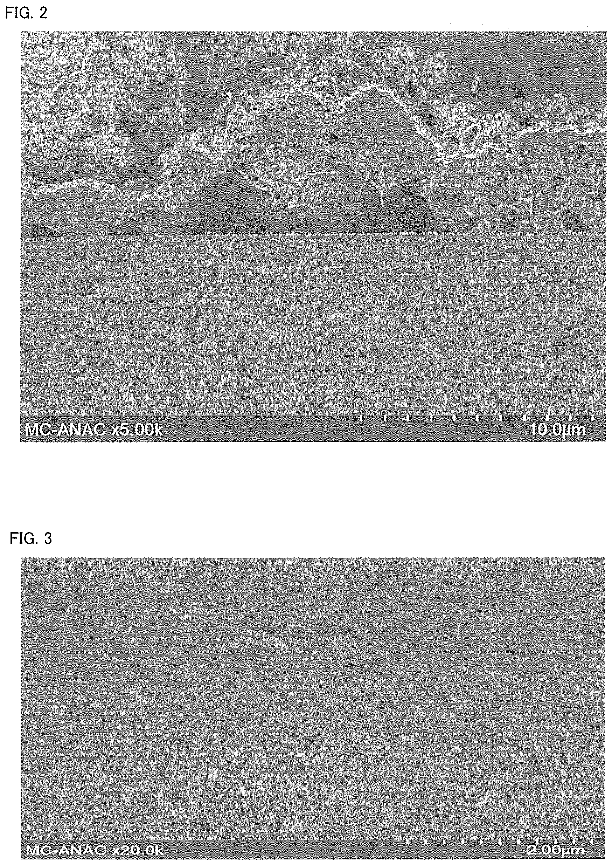

FIG. 2 shows an image of an electron micrograph of Example 6 in which the fibrous conductor is oriented to avoid the resin particles and form a conductive path. Therefore, as shown in Table 2, even when the blending ratio of the fibrous conductors is low, i.e., 1 part by weight with respect to 100 parts by weight of the conductive resin composition in Example 6, the surface resistance value is as low as 1.0×10⁷Ω/□, and excellent conductivity is achieved.

FIG. 3 shows an image of an electron micrograph of Comparative Example 1 in which resin particles are not blended and the blending ratio of the fibrous conductor is low, and thus the fibrous conductors are not in contact with each other and do not form a conductive path. Therefore, the surface resistance value is as high as 1.0×10¹²Ω/□ or more, and the conductivity was poor.

While the illustrative embodiments of the present invention are provided in the above-described description, such is for illustrative purpose only and it is not to be construed as limiting in any manner. Modification and variation of the present invention that will be obvious to those skilled in the art is to be covered by the following claims.

### Industrial Applicability

The conductive resin composition, coating agent, and laminate of the present invention can be preferably used, for example, for electronic devices.

### Description of Reference Numerals

1 Laminate
2 Substrate
3 Dry film of coating agent

## Claims

1. A conductive resin composition comprising:
a thermoplastic resin binder;
resin particles; and
a fibrous conductor,
wherein the thermoplastic resin binder and a resin of the resin particles are a same type of resin, and
wherein the fibrous conductor is a carbon nanotube and/or a metal nanowire.

2. The conductive resin composition according to claim 1,
wherein the resin is a polyolefin-based resin.

3. The conductive resin composition according to claim 2,
wherein the polyolefin-based resin includes a modified polyolefin-based resin modified with a monomer having a functional group.

4. The conductive resin composition according to claim 1,
wherein the blending ratio of the resin particles is 40 parts by mass or more and 90 parts by mass or less with respect to 100 parts by mass of a total amount of the thermoplastic resin binder and the resin particles.

5. The conductive resin composition according to claim 1,
wherein the blending ratio of the fibrous conductor is more than 0 parts by mass and 50 parts by mass or less with respect to 100 parts by mass of the conductive resin composition.

6. A coating agent comprising: the conductive resin composition according to claim 1.

7. A laminate comprising:
a substrate; and
a dried film of the coating agent according to claim 6.
